# EUROPÄISCHE PATENTANMELDUNG

(11) **EP 4 621 368 A1**
(43) Veröffentlichungstag der Anmeldung: **24.09.2025**
(21) Anmeldenummer: 25164586.7
(22) Anmeldetag: 18.03.2025
(51) Int. Cl.: G01K 1/02, G01D 3/00

(54) **VORRICHTUNG ZUM BESTIMMEN VON SENSORWERTEN**

(30) Priorität: 22.03.2024 DE 102024202800
(71) Anmelder: VOLKSWAGEN AG, 38440 Wolfsburg (DE)
(72) Erfinder: Stoll, Simon, 38440 Wolfsburg (DE); Schmäling, Jan, 38440 Wolfsburg (DE); Arnaout, Samy, 38440 Wolfsburg (DE); Rang, Oliver, 38440 Wolfsburg (DE)

(57) **Zusammenfassung**

Die Erfindung betrifft eine Vorrichtung (100) zum Bestimmen von Sensorwerten (T1, T2, T3), umfassend:
- mindestens einen Signalgenerator (10) zum Erzeugen von Eingangssignalen,
- einen ersten Zweig (Z1), wobei der erste Zweig (Z1) mindestens ein erstes Filterelement (21) und mindestens einen ersten Sensor (31) aufweist,
- mindestens einen weiteren Zweig (Z2, Z3), wobei der mindestens eine weitere Zweig (Z2, Z3) mindestens ein weiteres Filterelement (22, 23) und mindestens einen weiteren Sensor (32, 33) aufweist,
- mindestens ein Messelement (40) zum Abgreifen von Ausgangssignalen,
wobei der erste Zweig (Z1) und der mindestens eine weitere Zweig (Z2, Z3) in einer Parallelschaltung angeordnet sind, wobei der mindestens eine Signalgenerator (10) der Parallelschaltung vorgeschaltet ist, wobei das mindestens eine Messelement (40) der Parallelschaltung nachgeschaltet ist,
und ein Steuergerät (200) zum Steuern mindestens einer Antriebskomponente (60) eines Fahrzeugs.

## Beschreibung

Die Erfindung betrifft eine Vorrichtung zum Bestimmen von Sensorwerten und ein Steuergerät zum Steuern mindestens einer Antriebskomponente eines Fahrzeugs.

Die vorliegende Erfindung und die ihr zugrundeliegende Problematik werden im Hinblick auf einen Einsatz in der Automobiltechnologie erläutert, sind aber selbstverständlich auf beliebige Einsatzgebiete anwendbar.

In einem Hybrid- oder Elektrofahrzeug sind üblicher Weise ein oder mehrere Wechselrichter vorgesehen, wie z.B. Pulswechselrichter. Ein Wechselrichter dient z.B. in einem Fahrzeug zum Umformen von Gleichstrom aus einer Hochvoltbatterie des Fahrzeugs in Wechselstrom zum Antrieb eines Elektromotors. Der Wechselrichter kann somit eine Antriebskomponente des Fahrzeugs sein. Zum Schutz des Wechselrichters vor Überhitzung kann eine sensorische Temperaturermittlung vorgesehen sein. Die Temperaturermittlung und Steuerung des Wechselrichters erfolgt häufig mit Hilfe eines Steuergeräts. Zur Signalwandlung zwischen einem analogen Temperatursensor und dem Steuergerät kommen pro Temperatursensor ein Analog-Digital-Wandler (ADC) und ein Digital-Analog-Wandler (DAC) zum Einsatz, welche zur Signalübertragung wiederum z.B. an mindestens jeweils einen Pin eines Mikrocontrollers des Steuergeräts angeschlossen sind. Aufgrund gestiegener Anforderung im Bereich der Temperaturermittlung wird jedoch eine Vielzahl von Temperatursensoren benötigt, um z.B. das Temperaturfeld des Wechselrichters hinreichend genau abzubilden. Gleichzeitig ist die Anzahl der Pins auf einem Mikrocontroller begrenzt. Dies hat wiederum zur Folge, dass kostspielige Umgehungslösungen wie z.B. ein Analogmultiplexing eingesetzt werden, um trotz der begrenzten Anzahl an Pins eine Vielzahl von Temperatursensoren auswerten zu können.

Die US 10 739 210 B2 bezieht sich auf einen Sensor zur Messung der Temperatur eines Fluids in einem Behälter sowie auf einen Temperaturregler und ein System.

Die JP 5 545 258 B2 bezieht sich auf eine Temperaturmessvorrichtung, die zur Messung der Temperatur eines Messobjekts dient. Als Messobjekt wird beispielhaft eine Batterie eines Fahrzeugs genannt. Die Temperaturmessvorrichtung kann eine Vielzahl von Sensoren umfassen, die z.B. an verschiedenen Stellen der Batterie angeordnet sind.

Es stellt sich das technische Problem, eine Vorrichtung zum Bestimmen von Sensorwerten und ein Steuergerät zum Steuern mindestens einer Antriebskomponente eines Fahrzeugs zu schaffen, welche ein schnelles und kostengünstiges Bestimmen von Sensorwerten bei minimalen Bauraumerfordernissen ermöglichen.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird eine Vorrichtung zum Bestimmen von Sensorwerten, umfassend:
- mindestens einen Signalgenerator zum Erzeugen von Eingangssignalen,
- einen ersten Zweig, wobei der erste Zweig mindestens ein erstes Filterelement und mindestens einen ersten Sensor aufweist,
- mindestens einen weiteren Zweig, wobei der mindestens eine weitere Zweig mindestens ein weiteres Filterelement und mindestens einen weiteren Sensor aufweist,
- mindestens ein Messelement zum Abgreifen von Ausgangssignalen,
wobei der erste Zweig und der mindestens eine weitere Zweig in einer Parallelschaltung angeordnet sind, wobei der mindestens eine Signalgenerator der Parallelschaltung vorgeschaltet ist, wobei das mindestens eine Messelement der Parallelschaltung nachgeschaltet ist, wobei die Vorrichtung dazu ausgebildet ist, folgende Schritte auszuführen:
- Erzeugen mindestens eines filterspezifischen Eingangssignals,
- Abgreifen mindestens eines zugehörigen Ausgangssignals,
- Bestimmen mindestens eines Sensorwerts für mindestens einen der Sensoren in Abhängigkeit des mindestens einen filterspezifischen Eingangssignals und des zugehörigen mindestens einen Ausgangssignals.

Die Vorrichtung nutzt den technischen Effekt, dass die Zweige der Parallelschaltung mittels des filterspezifischen Eingangssignals jeweils gezielt angesprochen werden können. Hierdurch wird erreicht, dass das Eingangssignal durch den Sensor des jeweils angesprochenen Zweigs geleitet wird und sich das abgegriffene Ausgangssignal somit auf den Sensor bezieht, der im maßgeblich angesprochenen Zweig angeordnet ist. Dies erlaubt ein schnelles und zuverlässiges Bestimmen der Sensorwerte. Ferner wird nur das nachgeschaltete mindestens eine Messelement benötigt, um das zum Bestimmen der Sensorwerte benötige Ausgangssignal abzugreifen. Dies reduziert die Komponentenkosten und den Bauraumbedarf. Ausgehend von dem abgegriffenen Ausgangssignal kann z.B. unter Ausnutzung physikalischer Zusammenhänge ein aktueller Sensorwert des jeweiligen Sensors bestimmt werden.

Das Erzeugen des mindestens einen filterspezifischen Eingangssignals kann mittels des mindestens einen Signalgenerators erfolgen. Das Eingangssignal ist insbesondere ein elektrisches Spannungssignal, wie z.B. ein Wechselspannungssignal. Eine Amplitude des Eingangssignals kann z.B. eine 12 Volt Spannung sein. Der Signalgenerator kann das Eingangssignal z.B. mit einer filterspezifischen Frequenz, filterspezifischen Amplitude und/oder filterspezifischen Wellenform erzeugen. Der Signalgenerator kann das Eingangssignal z.B. mit einer Frequenz aus einem Bereich von 10 Hz bis 20 kHz erzeugen. Der Signalgenerator kann insbesondere Eingangssignale in verschiedenen Wellenformen erzeugen, wie z.B. Sinusform, Rechteckform, Sägezahnform. Der Signalgenerator kann die Eingangssignale insbesondere frequenzmoduliert und/oder amplitudenmoduliert erzeugen. Beispielsweise können mehrere Eingangssignale mit unterschiedlichen Frequenzen in einem Sweep erzeugt werden. Mit Hilfe des Sweeps kann die Anregung mit unterschiedlichen Frequenzen besonders schnell durchgeführt werden.

Das filterspezifische Eingangssignal weist insbesondere mindestens eine Eigenschaft auf, die auf eine Filtereigenschaft mindestens eines Filterelements abgestimmt ist. Beispielsweise kann eine Frequenz und/oder Amplitude des filterspezifischen Eingangssignals auf einen Durchlassbereich des mindestens einen Filterelements abgestimmt sein. Auf diese Weise kann z.B. erreicht werden, dass das filterspezifische Eingangssignal zumindest ein Filterelement, z.B. das erste Filterelement, passieren kann und somit auch durch den zugehörigen Sensor des angesprochenen Zweigs geleitet wird. Selbstverständlich kann das mindestens eine filterspezifische Eingangssignal ferner auf mindestens eine Eigenschaft der verbleibenden Filterelemente abgestimmt sein. Auf diese Weise kann z.B. erreicht werden, dass das filterspezifische Eingangssignal die verbleibenden Filterelement nicht passieren kann. Zu diesem Zweck können selbstverständlich elektrische Eigenschaften des jeweiligen Filterelements vorbekannt sein, wie z.B. ein Widerstandswert, Induktionswert und/oder Kapazitätswert eines oder mehrerer in einem Filterelement verbauter Komponenten. Das filterspezifische Eingangssignal ermöglicht es insbesondere, dass ein bestimmter Sensorwert einem der Sensoren eindeutig zugeordnet werden kann.

Das mindestens eine erste Filterelement und/oder das mindestens eine weitere Filterelement kann/können z.B. als ein Tiefpassfilter, Hochpassfilter, Bandpassfilter oder Allpassfilter ausgebildet sein oder ein solches umfassen. Das jeweilige Filterelement kann als Komponente(n) z.B. einen oder mehrere Widerstände, einen oder mehrere Spulen und/oder einen oder mehrere Kondensatoren aufweisen. Jedes Filterelement kann einen Effekt auf die Amplitude und/oder Phase des Eingangssignals haben und auf diese Weise das zugehörige Ausgangssignal beeinflussen. Mit anderen Worten: Jedes Filterelement kann das Eingangssignal filtern.

Der mindestens eine erste Sensor und/oder der mindestens eine weitere Sensor kann/können z.B. resistiv, induktiv, kapazitiv, piezoelektrisch, photoelektrisch und/oder elektromagnetisch ausgebildet sein. Ein Sensor kann z.B. als resistiver Temperatursensor ausgebildet sein, beispielsweise als NTC- oder PTC-Widerstand. Insbesondere kann mindestens ein erster Sensorwert für den mindestens einen ersten Sensor und mindestens ein weiterer Sensorwert für den mindestens einen weiteren Sensor bestimmt werden. Der Sensorwert kann z.B. ein Widerstandwert, Induktionswert, Kapazitätswert und/oder Spannungswert des jeweiligen Sensors sein oder einen solchen Wert umfassen. Insbesondere kann der Sensorwert eine aktuelle Zustandsgröße für den jeweiligen Sensor umfassen oder z.B. mittels einer vorbekannten Zuordnung einer solchen Zustandsgröße zugeordnet werden, wie z.B. dass ein Sensorwert von 500 Ohm einer Temperatur von 20 °C zugeordnet ist. Auf diese Weise kann mittels der Vorrichtung z.B. ein Temperaturfeld um einen Wechselrichter herum sensorisch überwacht werden. Die sensorisch zugeordneten Zustandsgrößen können z.B. Temperatur, Energie, Volumen, Masse, Druck umfassen.

Insbesondere ist der mindestens eine erste Sensor mit dem ersten Filterelement in Reihe geschaltet. Insbesondere ist der mindestens eine erste Sensor dem ersten Filterelement nachgeschaltet. Insbesondere ist der mindestens eine weitere Sensor mit dem weiteren Filterelement in Reihe geschaltet. Insbesondere ist der mindestens eine weitere Sensor dem weiteren Filterelement nachgeschaltet. Hierdurch ist der Effekt des jeweiligen Sensors auf die filterspezifischen Eigenschaften, insbesondere die filterspezifische Grenzfrequenz, des jeweiligen Filterelements besonders gering.

Das Abgreifen mindestens eines zugehörigen Ausgangssignals kann mittels des mindestens einen Messelements erfolgen. Das Ausgangssignal kann insbesondere ein durch die Vorrichtung fließender Strom sein. Das Ausgangssignal kann ferner ein elektrisches Spannungssignal, wie z.B. ein Wechselspannungssignal, umfassen. Das Ausgangssignal kann in Abhängigkeit der Filterelemente gegenüber dem Eingangssignal verändert sein. Beispielsweise kann eine Amplitude oder Phase des Ausgangssignals - z.B. aufgrund einer Filterung durch die Filterelemente - gegenüber einer Amplitude und/oder Phase des Eingangssignals verändert sein. Ein zugehöriges Ausgangssignal bezeichnet insbesondere ein Ausgangssignal, welches einem filterspezifischen Eingangssignal zugeordnet ist. Das mindestens eine Messelement kann z.B. ein Voltmeter oder Amperemeter umfassen. Das Messelement kann z.B. einen Messwiderstand umfassen. Die Ausgangssignale können z.B. über dem Messwiderstand abgegriffen werden.

Die Vorrichtung kann mindestens eine Steuereinrichtung umfassen. Die Steuereinrichtung kann z.B. als ein Mikrocontroller ausgebildet sein oder einen solchen aufweisen. Die Steuereinrichtung kann mit dem mindestens einen Signalgenerator signaltechnisch verbunden sein, um z.B. Eigenschaften wie die Frequenz und/oder Amplitude des filterspezifischen Eingangssignals vorzugeben. Die Steuereinrichtung kann mit dem mindestens einen Messelement signaltechnisch verbunden sein, um z.B. das abgegriffene Ausgangssignal auszuwerten. Das Bestimmen der Sensorwerte kann z.B. mittels der mindestens einen Steuereinrichtung erfolgen. Das Bestimmen der Sensorwerte kann aber selbstverständlich auch mittels des mindestens einen Messelements erfolgen.

Das Messelement und/oder der Signalgenerator kann/können ferner einen Analog-DigitalWandler und/oder Digital-Analog-Wandler aufweisen, um z.B. analoge Signale in digitale Signale umzuwandeln und umgekehrt. Dies vereinfacht die Kommunikation mit einer z.B. digitalen Steuereinrichtung.

Das Bestimmen der Sensorwerte kann z.B. umfassen, dass ein physikalischer Zusammenhang zwischen dem filterspezifischen Eingangssignal, dem zugehörigen abgegriffenen Ausgangssignal und dem Sensorwert ausgewertet wird. Beispielsweise kann ein aktueller Sensorwert des mindestens einen Sensors unter der Annahme bestimmt werden, dass das filterspezifische Eingangssignal nur durch einen der parallelgeschalteten Zweige geleitet wurde, da z.B. die anderen Filterelemente das Eingangssignal blockiert haben. Hierdurch wird der Gesamtstrom nahezu vollständig durch den Sensor fließen, dessen Zweig angesprochen wurde. Mittels des dem Sensor nachgeschalteten Messelements kann das Ausgangssignal als ein Gesamtstrom abgegriffen werden. Ist der Sensor resistiv ausgebildet, so wird die über dem Sensor abfallende Spannung annähernd gleich der Spannung des Eingangssignals sein, da das Filterelement das Eingangssignal nahezu ungehindert passieren lässt. Der Sensorwert, hier z.B. ein Widerstandswert, kann daher im Sinne des Ohm'schen Gesetzes als ein Verhältnis zwischen der Spannung des filterspezifischen Eingangssignals und dem als Ausgangssignal abgegriffenen Gesamtstrom bestimmt werden.

In einer Ausführungsform ist das mindestens eine erste Filterelement dazu ausgebildet, mindestens ein erstes filterspezifisches Eingangssignal passieren zu lassen, wobei das mindestens eine weitere Filterelement dazu ausgebildet ist, das mindestens eine erste filterspezifische Eingangssignal zu dämpfen. Auf diese Weise kann erreicht werden, dass das erste filterspezifische Eingangssignal maßgeblich durch den ersten Zweig und somit durch den mindestens einen ersten Sensor geleitet wird. Dies erhöht die Genauigkeit beim Bestimmen des Sensorwerts für den ersten Sensor. Das Bestimmen des mindestens einen Sensorwerts für den mindestens einen ersten Sensor erfolgt insbesondere in Abhängigkeit des mindestens einen ersten filterspezifischen Eingangssignals und des zugehörigen mindestens einen Ausgangssignals. Die Filterelemente können insbesondere unterschiedliche Grenzfrequenzen oder Durchlassbereiche aufweisen. Das mindestens eine erste filterspezifische Eingangssignal kann z.B. mit einer Frequenz aus einem Durchlassbereich des ersten Filterelements erzeugt werden, wobei die Frequenz des ersten filterspezifischen Eingangssignal nicht in einem Durchlassbereich des weiteren Filterelements enthalten ist.

In einer Ausführungsform ist das mindestens eine weitere Filterelement dazu ausgebildet, mindestens ein weiteres filterspezifisches Eingangssignal passieren zu lassen, wobei das mindestens eine erste Filterelement dazu ausgebildet ist, das mindestens eine weitere filterspezifische Eingangssignal zu dämpfen. Auf diese Weise kann erreicht werden, dass das weitere filterspezifische Eingangssignal maßgeblich durch den weiteren Zweig und somit durch den mindestens einen weiteren Sensor geleitet wird. Dies erhöht die Genauigkeit beim Bestimmen des Sensorwerts für den weiteren Sensor. Das Bestimmen des mindestens einen Sensorwerts für den mindestens einen weiteren Sensor erfolgt insbesondere in Abhängigkeit des mindestens einen weiteren filterspezifischen Eingangssignals und des zugehörigen mindestens einen Ausgangssignals. Das mindestens eine weitere filterspezifische Eingangssignal kann z.B. mit einer Frequenz aus einem Durchlassbereich des weiteren Filterelements erzeugt werden, wobei die Frequenz des weiteren filterspezifischen Eingangssignal nicht in einem Durchlassbereich des ersten Filterelements enthalten ist.

In einer Ausführungsform weist jedes Filterelement einen filterspezifischen Durchlassbereich auf, wobei die Durchlassbereiche voneinander verschieden sind, wobei das Erzeugen des mindestens einen filterspezifischen Eingangssignals in Abhängigkeit des jeweiligen Durchlassbereichs erfolgt. Auf diese Weise kann sichergestellt werden, dass die filterspezifischen Eingangssignale eindeutig einem Filterelement zugeordnet sind.

In einer Ausführungsform erfolgt das Bestimmen des mindestens einen Sensorwerts für mindestens einen der Sensoren mit Hilfe eines vorrichtungsspezifischen Referenzkennfelds. Auf diese Weise können Kopplungseffekte wie z.B. ein Einfluss eines Filterelements auf ein anderes Filterelement in einem anderen Zweig beim Bestimmen der Sensorwerte berücksichtigt werden. Dies erhöht die Genauigkeit beim Bestimmen der Sensorwerte. Das vorrichtungsspezifische Referenzkennfeld ist insbesondere z.B. aus Vorversuchen oder einer Simulation vorbekannt. Insbesondere erfolgt das Bestimmen des mindestens einen Sensorwerts für jeden Sensor mit Hilfe des vorrichtungsspezifischen Referenzkennfelds.

In einer Ausführungsform ist mindestens ein Filterelement mehrstufig ausgebildet, wobei in dem mindestens einen mehrstufig ausgebildeten Filterelement mehrere Filterglieder in Reihe geschaltet sind. Auf diese Weise ist das Filterverhalten des mindestens einen mehrstufig ausgebildeten Filterelements präziser, da aufgrund der Mehrstufigkeit z.B. die Flankensteilheit des Filterelements erhöht ist. Mit anderen Worten: Der Wechsel von einem Durchlassbereich zu einem Nicht-Durchlassbereich ist in dem mehrstufig ausgebildeten Filterelement abrupter. Ein Filterglied kann z.B. als RC-Glied, LC-Glied oder RL-Glied ausgebildet sein, wobei R einen Widerstand, C einen Kondensator und L eine Spule bezeichnet.

In einer Ausführungsform weist die Vorrichtung eine Steuereinrichtung auf, wobei die Steuereinrichtung über eine erste Schnittstelle mit dem mindestens einen Signalgenerator verbunden ist und die Steuereinrichtung über eine zweite Schnittstelle mit dem mindestens einen Messelement verbunden ist. Auf diese Weise muss die Steuereinrichtung lediglich zwei Schnittstellen bereitstellen, um mit dem Signalgenerator und dem Messelement signaltechnisch verbunden zu werden. Die erste Schnittstelle und/oder die zweite Schnittstelle kann/können z.B. als Pin eines Mikrocontrollers der Steuereinrichtung ausgebildet sein.

In einer Ausführungsform erfolgt das Erzeugen mindestens eines filterspezifischen Eingangssignals in Abhängigkeit mindestens eines zuvor bestimmten Sensorwerts. Auf diese Weise können Effekte, die ein Sensorwert eines Sensors z.B. auf das Filterverhalten der Filterelemente hat, beim Erzeugen des filterspezifischen Eingangssignals berücksichtigt werden. Hierdurch kann der Sensorwert genauer bestimmt werden. Beispielsweise kann ein zuvor bestimmter Sensorwert den Durchlassbereich des ersten Sensors leicht verschieben. Durch Berücksichtigen des zuvor bestimmten Sensorwerts können die zu erzeugenden filterspezifischen Eingangssignale z.B. mit einer Frequenz erzeugt werden, welche in dem verschobenen Durchlassbereich liegt. Der Zusammenhang zwischen zuvor bestimmten Sensorwert und z.B. dem verschobenen Durchlassbereich kann aus Vorversuchen vorbekannt sein. Der mindestens eine zuvor bestimmte Sensorwert kann insbesondere ein unmittelbar zuvor ermittelter Sensorwert des mindestens einen ersten Sensors und/oder des mindestens einen weiteren Sensors sein.

In einer Ausführungsform ist das mindestens eine filterspezifische Eingangssignal ein Rechtecksignal. Auf diese Weise lässt sich z.B. das filterspezifische Eingangssignal besonders einfach erzeugen, z.B. wenn der Signalgenerator durch eine digitale Steuereinrichtung gesteuert wird.

Weiter vorgeschlagen wird ein Steuergerät zum Steuern mindestens einer Antriebskomponente eines Fahrzeugs, wobei das Steuergerät mindestens eine Vorrichtung nach einer in dieser Offenbarung beschriebenen Ausführungsform umfasst, wobei das Steuergerät mindestens eine Steuergröße zum Steuern der mindestens einen Antriebskomponente des Fahrzeugs in Abhängigkeit mindestens eines mittels der mindestens einen Vorrichtung bestimmten Sensorwerts erzeugt. Durch Erzeugen der Steuergröße kann z.B. ein Betriebsmodus der Antriebskomponente des Fahrzeugs in Abhängigkeit des bestimmten Sensorwerts angepasst werden. Der Betriebsmodus der mindestens einen Antriebskomponente kann z.B. angepasst werden, wenn mindestens ein bestimmter Sensorwert, der z.B. eine aktuelle Temperatur der Antriebskomponente repräsentieren kann, ein Schwellwertkriterium erfüllt. Beispielsweise kann mittels des Steuergeräts eine Zustandsgröße wie z.B. die Temperatur der mindestens einen Antriebskomponente sensorisch überwacht werden. Die Antriebskomponente kann insbesondere angesteuert werden, wenn der bestimmte Sensorwert höher als ein vorgegebener Schwellwert ist. Der Steuerbefehl kann z.B. dazu ausgebildet sein, die mindestens eine Antriebskomponente auszuschalten, insbesondere wenn das zuvor erläuterte Schwellwertkriterium erfüllt ist Auf diese Weise kann die Antriebskomponente z.B. vor Überhitzung geschützt werden. Die mindestens eine Antriebskomponente kann z.B. ein Pulswechselrichter des Fahrzeugs sein. Das Fahrzeug kann z.B. ein Elektro- oder Hybridfahrzeug sein.

Das Steuergerät kann insbesondere dazu ausgebildet sein, ein oder mehrere der in dieser Offenbarung erläuterten Schritte auszuführen. Die in dieser Offenbarung für die Vorrichtung angeführten technischen Effekte und Vorteile erstrecken sich selbstverständlich auch auf das Steuergerät und umgekehrt.

Die Erfindung wird anhand von Ausführungsbeispielen näher erläutert. Die Figuren zeigen:
Fig. 1 eine schematische Darstellung einer Ausführungsform eines Steuergeräts mit einer Vorrichtung,
Fig. 2 ein schematisches Flussdiagramm einer Abfolge von Schritten und
Fig. 3 eine schematische Darstellung eines vorrichtungsspezifischen Referenzkennfelds.

Nachfolgend bezeichnen gleiche Bezugszeichen Elemente mit gleichen technischen Merkmalen.

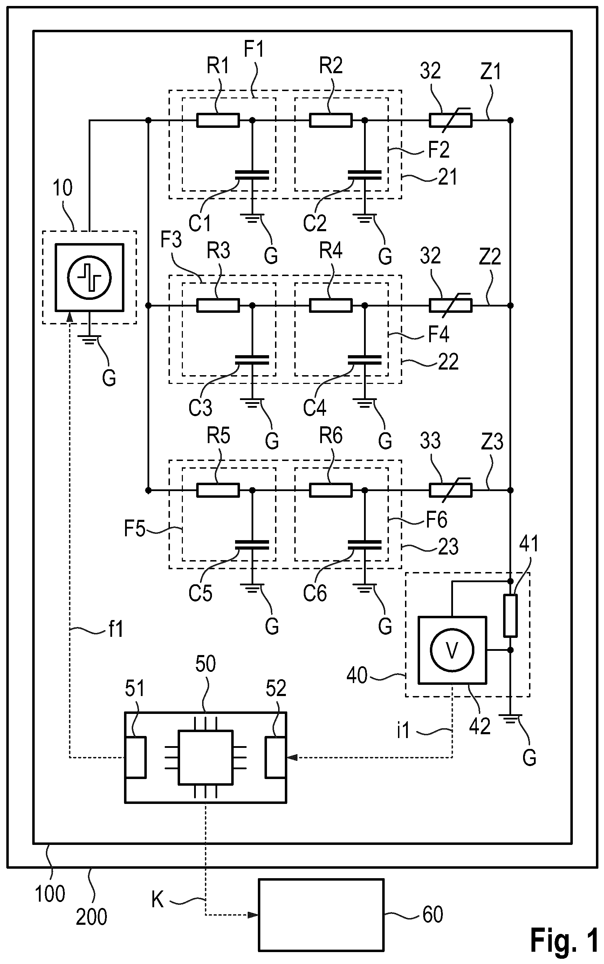

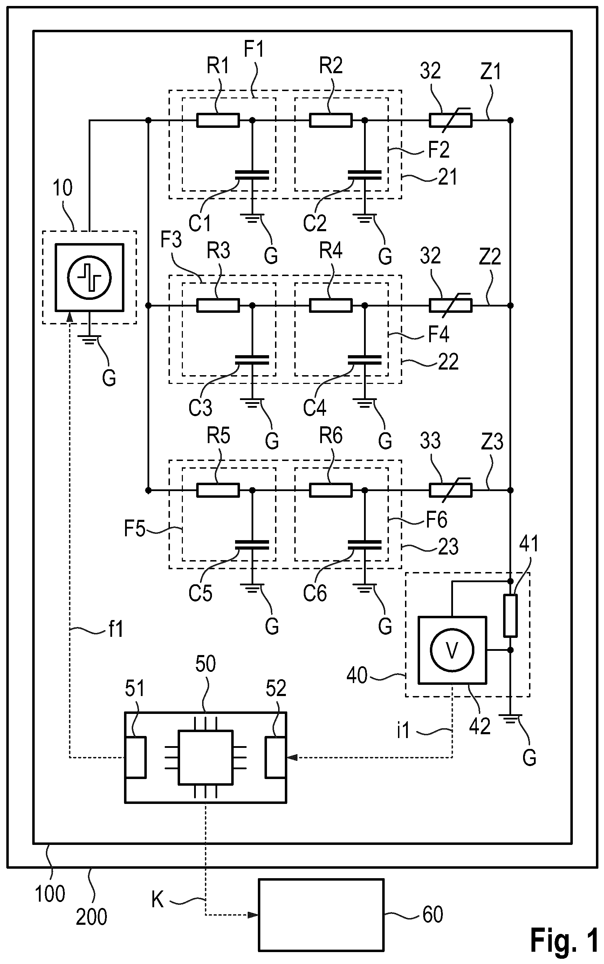

Fig. 1 zeigt eine schematische Darstellung eines Steuergeräts 200 zum Steuern einer z.B. als Pulswechselrichter ausgebildeten Antriebskomponente 60 eines Elektrofahrzeugs (nicht dargestellt). Das Steuergerät 200 umfasst eine Vorrichtung 100. Das Steuergerät 200 und/oder die Vorrichtung 100 kann z.B. mit Energie aus dem Bordnetz des Fahrzeugs versorgt werden (nicht dargestellt). Das Steuergerät 200 erzeugt mindestens eine Steuergröße K, um die Antriebskomponente 60 in Abhängigkeit mindestens eines mittels der Vorrichtung 100 bestimmten Sensorwerts zu steuern.

Die Vorrichtung 100 zum Bestimmen von Sensorwerten umfasst die im Folgenden erläuterten Komponenten:
Ein Signalgenerator 10 dient zum Erzeugen von mindestens einem filterspezifischen Eingangssignal f1. Das filterspezifische Eingangssignal f1 kann z.B. ein rechteckförmiges Wechselspannungssignal mit einer filterspezifischen Frequenz sein. An den Signalgenerator 10 sind ein als elektrischer Leiter ausgebildeter erster Zweig Z1 und zwei z.B. ebenfalls als elektrische Leiter ausgebildete weitere Zweige Z2, Z3 angeschlossen. Die Zweige Z1, Z2, Z3 sind in einer Parallelschaltung angeordnet. Jeder Zweig Z1, Z2, Z3 weist ein Filterelement 21, 22, 23 auf. Den Filterelementen 21, 22, 23 ist jeweils ein als resistiver Widerstand ausgebildeter Sensor 31, 32, 33 nachgeschaltet. Den Zweigen Z1, Z2, Z3 ist ein Messelement 40 zum Abgreifen mindestens eines zu dem Eingangssignal f1 zugehörigen Ausgangssignals i1 nachgeschaltet. Das Messelement 40 weist zu diesem Zweck einen Messwiderstand 41 und ein Voltmeter 42 auf. Die Erdung der Vorrichtung 100 bzw. verschiedener Komponenten der Vorrichtung 100 ist durch G gekennzeichnet.

Die Filterelemente 21, 22, 23 sind mehrstufig ausgebildet. In jedem mehrstufig ausgebildeten Filterelement 21, 22, 23 sind zwei als RC-Glied ausgebildete Filterglieder F1, ..., F6 in Reihe geschaltet sind. Jedes RC-Glied ist als ein Tiefpassfilter ausgebildet und weist einen Widerstand R1, ..., R6 und einen Kondensator C1, ..., C6 auf. Durch die Mehrstufigkeit ist der Wechsel von einem Durchlass eines Eingangssignals zu einem Nicht-Durchlass eines Eingangssignals in jedem Filterelement 21, 22, 23 sehr abrupt.

Ferner weist jedes Filterelement 21, 22, 23 einen filterspezifischen Durchlassbereich (nicht dargestellt) hinsichtlich der Frequenz des Eingangssignals auf, wobei die Durchlassbereiche voneinander verschieden sind. Auf diese Weise kann z.B. nur ein solches Eingangssignal das erste Filterelement 21 passieren, welches eine Frequenz aus dem Durchlassbereich des ersten Filterelements 21 aufweist. Das Erzeugen des mindestens einen filterspezifischen Eingangssignals kann daher in Abhängigkeit des jeweiligen Durchlassbereichs erfolgen. Auf diese Weise kann sichergestellt werden, dass das filterspezifische Eingangssignale f1 eindeutig dem Filterelement 21 zugeordnet ist.

Die Vorrichtung 100 weist ferner eine z.B. als Mikrocontroller ausgebildete Steuereinrichtung 50 auf. Die Steuereinrichtung 50 ist über eine als Mikrocontroller-Pin ausgebildete erste Schnittstelle 51 mit dem Signalgenerator 10 verbunden. Über eine ebenfalls als Mikrocontroller-Pin ausgebildete zweite Schnittstelle 52 ist die Steuereinrichtung 50 zudem mit dem Voltmeter 42 des Messelements 40 verbunden. Über die Schnittstellen 51, 52 kann die Steuereinrichtung 50 z.B. die Frequenz f1 des filterspezifischen Eingangssignale vorgeben und das zugehörige Ausgangssignal i1 von dem Messelement 40 zur Auswertung empfangen.

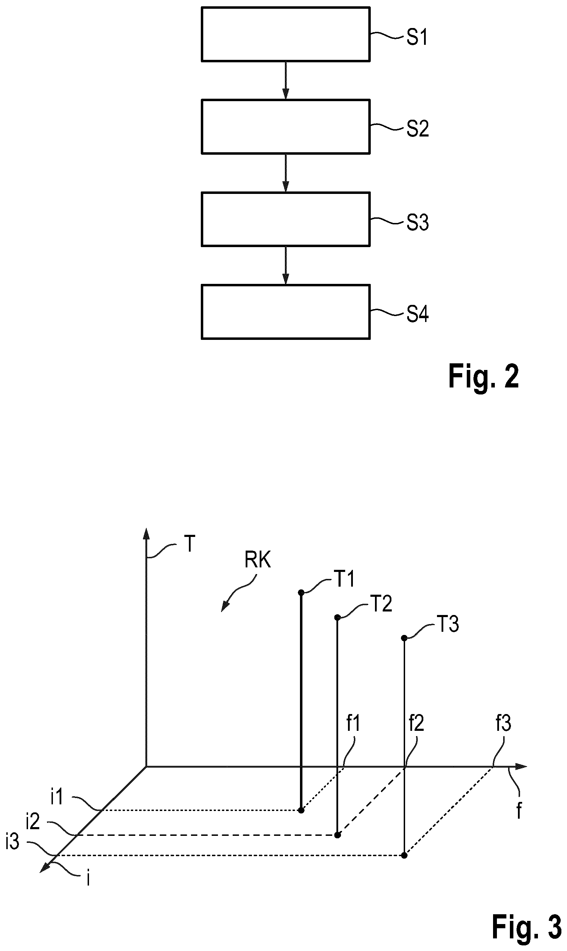

Fig. 2 zeigt ein schematisches Flussdiagramm einer Abfolge von Schritten. Das in Fig. 1 gezeigte Steuergerät 200 mit Vorrichtung 100 ist dazu ausgebildet, die im Folgenden erläuterten Schritte auszuführen.

In einem Schritt S1 wird ein filterspezifisches Eingangssignal f1 beispielsweise mittels des Signalgenerators 10 erzeugt. Eine Frequenz des filterspezifischen Eingangssignals f1 entspricht einer Frequenz, die von dem ersten Filterelement 21 nicht gefiltert wird und daher dieses nahezu ungedämpft passiert. Das filterspezifische Eingangssignal f1 kann z.B. durch die Steuereinrichtung 50 vorgegeben werden (vgl. Fig. 1). Die Filterelemente 22, 23 können dazu ausgebildet sein, das filterspezifische Eingangssignal f1 nicht passieren zu lassen, d.h. z.B. dieses stark zu dämpfen. Auf diese Weise wird das filterspezifische Eingangssignal f1 lediglich durch den ersten Zweig Z1 geleitet.

In einem Schritt S2 wird z.B. mittels des Messelements 40 ein zugehöriges Ausgangssignal i1 abgegriffen. Das abgegriffene Ausgangssignal i1 kann z.B. die durch den Messwiderstand 41 geflossene Stromstärke angeben. Das abgegriffene Ausgangssignal i1 kann zur Auswertung z.B. an die Steuereinrichtung 50 übermittelt werden (vgl. Fig. 1). Das Ausgangssignal i1 kann unter der Annahme, dass das filterspezifische Eingangssignal f1 nur den ersten Zweig Z1 passiert hat, zum Bestimmen eines Sensorwerts für den ersten Sensor 31 herangezogen werden.

In einem Schritt S3 wird z.B. mittels der Steuereinrichtung 50 in Abhängigkeit des filterspezifischen Eingangssignals f1 und des zugehörigen Ausgangssignals i1 ein Sensorwert für den ersten Sensor 32 bestimmt. Der bestimmte Sensorwert kann z.B. eine aktuelle Temperatur des Sensors 31 angeben oder dieser zugeordnet werden.

In einem Schritt S4 kann z.B. mittels der Steuereinrichtung 50 eine Steuergröße K in Abhängigkeit des bestimmten Sensorwerts erzeugt werden und z.B. an eine Antriebskomponente 60 eines Elektrofahrzeugs ausgegeben werden (vgl. Fig. 1).

Der Schritt S1 (und auch die folgenden Schritte S2 bis S4) kann/können selbstverständlich mit weiteren filterspezifischen Eingangssignalen f2, f3 wiederholt werden, um für die verbleibenden Sensoren 32, 33 ebenfalls Sensorwerte bestimmen zu können.

Fig. 3 zeigt eine schematische Darstellung eines vorrichtungsspezifischen Referenzkennfeld RK für die Vorrichtung 100 (vgl. Fig. 1). Das Referenzkennfeld RK ist als dreidimensionales Koordinatensystem dargestellt, wobei drei Sensorwerte T1, T2, T3 über drei Frequenzen f der filterspezifischen Eingangssignale f1, f2, f3 und den Strömen i der zugehörigen, abgegriffenen Ausgangssignale i1, i2, i3 aufgetragen sind. Hierdurch ist eine Zuordnung der drei filterspezifischen Eingangssignalen f1, f2, f3 und zugehörigen Ausgangssignalen i1, i2, i3 zu den jeweiligen Sensorwerten T1, T2, T3 möglich. Selbstverständlich ist diese Zuordnung lediglich beispielhaft.

Die filterspezifischen Eingangssignale f1, f2, f3 werden mit der Intention erzeugt, dass lediglich ein bestimmter Zweig Z1, Z2, Z3 der Vorrichtung angesprochen wird. Auf diese Weise können die filterspezifischen Eingangssignale f1, f2, f3 jeweils einem bestimmten Sensor 31, 32, 33 und daher auch einem Sensorwert T1, T2, T3 eindeutig zugeordnet werden kann. Mit anderen Worten: Das filterspezifische Eingangssignal f1, f2, f3 wird auf einem vorgegebenen Pfad durch die Zweige Z1, Z2, Z3 der Vorrichtung 100 geleitet, da die Filtereigenschaften der Filterelemente 21, 22, 23 beim Erzeugen des Eingangssignals f1, f2, f3 berücksichtigt werden.

Das vorrichtungsspezifische Referenzkennfeld RK kann z.B. mittels einer Simulation ermittelt werden. Hierbei können nacheinander die filterspezifischen Eingangssignale f1, f2, f3 erzeugt werden und zugehörige Ausgangssignale i1, i2, i3 nacheinander abgegriffen werden. Die Sensorwerte T1, T2, T3 können im Rahmen der Simulation als Referenzwerte vorbekannt sein. Auf diese Weise kann eine vorrichtungsspezifische Zuordnung zwischen den filterspezifischen Eingangssignalen f1, f2, f3, den zugehörigen Ausgangssignalen i1, i2, i3 und den Sensorwerten T1, T2, T3 für verschiedene Betriebspunkte ermittelt werden, die auch im nicht simulierten Betrieb der Vorrichtung 100 zum Bestimmen der Sensorwerte T1, T2, T3 herangezogen werden kann.

Das Referenzkennfeld RK kann z.B. in dem Messelement 40 und/oder der Steuereinrichtung 50 hinterlegt sein. Auf diese Weise kann zum Bestimmen eines aktuellen Sensorwerts T1, T2, T3 die Frequenz eines frequenzspezifischen Eingangssignals f1, f2, f3 mit dem zugehörigen Ausgangssignal i1, i2, i3 abgeglichen werden, um dann mit Hilfe des Referenzfelds RK den jeweiligen Sensorwert T1, T2, T3 zu bestimmen.

### Bezugszeichenliste

- 10: Signalgenerator
- 21, 22, 23: Filterelement
- 31, 32, 33: Sensor
- 40: Messelement
- 41: Messwiderstand
- 42: Voltmeter
- 50: Steuereinrichtung
- 51, 52: Schnittstelle
- 60: Antriebskomponente
- 100: Vorrichtung
- 200: Steuergerät
- C1, ..., C6: Kondensator
- f: Frequenz des Eingangssignals
- f1, f2, f3: filterspezifisches Eingangssignal
- F1, ... F6: Filterglied
- G: Erdung
- K: Steuergröße
- i: Strom
- i1, i2, i3: Ausgangssignal
- RK: Referenzkennfeld
- R1, ..., R6: Widerstand
- S1, ... S4: Schritt
- T1, T2, T3: Sensorwerte
- Z1, Z2, Z3: Zweig

## Patentansprüche

1. Vorrichtung (100) zum Bestimmen von Sensorwerten (T1, T2, T3), umfassend:
- mindestens einen Signalgenerator (10) zum Erzeugen von Eingangssignalen,
- einen ersten Zweig (Z1), wobei der erste Zweig (Z1) mindestens ein erstes Filterelement (21) und mindestens einen ersten Sensor (31) aufweist,
- mindestens einen weiteren Zweig (Z2, Z3), wobei der mindestens eine weitere Zweig (Z2, Z3) mindestens ein weiteres Filterelement (22, 23) und mindestens einen weiteren Sensor (32, 33) aufweist,
- mindestens ein Messelement (40) zum Abgreifen von Ausgangssignalen,
wobei der erste Zweig (Z1) und der mindestens eine weitere Zweig (Z2, Z3) in einer Parallelschaltung angeordnet sind, wobei der mindestens eine Signalgenerator (10) der Parallelschaltung vorgeschaltet ist, wobei das mindestens eine Messelement (40) der Parallelschaltung nachgeschaltet ist, wobei die Vorrichtung (100) dazu ausgebildet ist, folgende Schritte auszuführen:
- Erzeugen (S1) mindestens eines filterspezifischen Eingangssignals (f1, f2, f3),
- Abgreifen (S2) mindestens eines zugehörigen Ausgangssignals (i1, i2, i3),
- Bestimmen (S3) mindestens eines Sensorwerts (T1, T2, T3) für mindestens einen der Sensoren (31, 32, 33) in Abhängigkeit des mindestens einen filterspezifischen Eingangssignals (f1, f2, f3) und des zugehörigen mindestens einen Ausgangssignals (i1, i2, i3).

2. Vorrichtung (100) nach Anspruch 1, **dadurch gekennzeichnet, dass** das mindestens eine erste Filterelement (21) dazu ausgebildet ist, mindestens ein erstes filterspezifisches Eingangssignal (f1) passieren zu lassen, wobei das mindestens eine weitere Filterelement (22, 23) dazu ausgebildet ist, das mindestens eine erste filterspezifische Eingangssignal (f1) zu dämpfen.

3. Vorrichtung (100) nach Anspruch 1 oder 2, **dadurch gekennzeichnet, dass** das mindestens eine weitere Filterelement (22, 23) dazu ausgebildet ist, mindestens ein weiteres filterspezifisches Eingangssignal (f2, f3) passieren zu lassen, wobei das mindestens eine erste Filterelement (21) dazu ausgebildet ist, das mindestens eine weitere filterspezifische Eingangssignal (f2, f3) zu dämpfen.

4. Vorrichtung (100) nach einem der vorangegangen Ansprüche, **dadurch gekennzeichnet, dass** jedes Filterelement (21, 22, 23) einen filterspezifischen Durchlassbereich aufweist, wobei die Durchlassbereiche voneinander verschieden sind, wobei das Erzeugen des mindestens einen filterspezifischen Eingangssignals (f1, f2, f3) in Abhängigkeit des jeweiligen Durchlassbereichs erfolgt.

5. Vorrichtung (100) nach einem der vorangegangen Ansprüche, **dadurch gekennzeichnet, dass** das Bestimmen des mindestens einen Sensorwerts (T1, T2, T3) für mindestens einen der Sensoren (31, 32, 33) mit Hilfe eines vorrichtungsspezifischen Referenzkennfelds (RK) erfolgt.

6. Vorrichtung (100) nach einem der vorangegangen Ansprüche, **dadurch gekennzeichnet, dass** mindestens ein Filterelement (21, 22, 23) mehrstufig ausgebildet ist, wobei in dem mindestens einen mehrstufig ausgebildeten Filterelement (21, 22, 23) mehrere Filterglieder (F1, ..., F6) in Reihe geschaltet sind.

7. Vorrichtung (100) nach einem der vorangegangen Ansprüche, **dadurch gekennzeichnet, dass** die Vorrichtung (100) eine Steuereinrichtung (50) aufweist, wobei die Steuereinrichtung (50) über eine erste Schnittstelle (51) mit dem mindestens einen Signalgenerator (10) verbunden ist und die Steuereinrichtung (50) über eine zweite Schnittstelle (52) mit dem mindestens einen Messelement (40) verbunden ist.

8. Vorrichtung (100) nach einem der vorangegangen Ansprüche, **dadurch gekennzeichnet, dass** das Erzeugen mindestens eines filterspezifischen Eingangssignals (f1 f2, f3) in Abhängigkeit mindestens eines zuvor bestimmten Sensorwerts (T1, T2, T3) erfolgt.

9. Vorrichtung (100) nach einem der vorangegangen Ansprüche, **dadurch gekennzeichnet, dass** das mindestens eine filterspezifische Eingangssignal (f1, f2, f3) ein Rechtecksignal ist.

10. Steuergerät (200) zum Steuern mindestens einer Antriebskomponente (60) eines Fahrzeugs, wobei das Steuergerät (200) mindestens eine Vorrichtung (100) nach einem der Ansprüche 1 bis 9 umfasst, wobei das Steuergerät (200) mindestens eine Steuergröße (K) zum Steuern der mindestens einen Antriebskomponente (60) des Fahrzeugs in Abhängigkeit mindestens eines mittels der mindestens einen Vorrichtung (100) bestimmten Sensorwerts (T1, T2, T3) erzeugt.
